# EUROPÄISCHE PATENTSCHRIFT

(11) **EP 2 748 453 B1**
(45) Veröffentlichungstag und Bekanntmachung des Hinweises auf die Patenterteilung: **20.05.2015**
(21) Anmeldenummer: 12740491.1
(22) Anmeldetag: 17.07.2012
(51) Int. Cl.: F02F 7/00

(54) **STEUERGEHÄUSEMODUL UND HERSTELLUNGSVERFAHREN**
CONTROL HOUSING MODULE AND PRODUCTION METHOD
MODULE DE BOÎTIER DE COMMANDE ET PROCÉDÉ DE FABRICATION ASSOCIÉ

(30) Priorität: 24.08.2011 DE 102011111744
(43) Veröffentlichungstag der Anmeldung: 02.07.2014
(73) Patentinhaber: Daimler AG, 70327 Stuttgart (DE)
(72) Erfinder: REESE, Eckhard, 21641 Apensen (DE); ZOLL, Günther, 70569 Stuttgart (DE)
(74) Vertreter: JENSEN & SON
(86) Internationale Anmeldenummer: PCT/EP2012/002997
(87) Internationale Veröffentlichungsnummer: WO 2013/026511

(56) Entgegenhaltungen:
- EP-A1- 1 522 682
- DD-A1- 211 146
- DE-A1- 3 606 052
- US-A1- 2009 130 417
- US-B1- 6 478 004

## Beschreibung

Die Erfindung betrifft ein Steuergehäusemodul für eine Verbrennungskraftmaschine, insbesondere für eine Verbrennungskraftmaschine eines Kraftfahrzeugs und ein Verfahren zur Herstellung des Steuergehäusemoduls.

Steuergehäusemodule für Verbrennungskraftmaschinen werden bislang in der Serienfertigung fast ausschließlich aus Al-Si-Legierungen im Druckguss hergestellt, wie zum Beispiel in der DE 44 00 952 C1 beschrieben. Bei schwereren Ausführungen kann entsprechend des Kurbelgehäuses auch Grauguss zur Fertigung des Steuergehäusemoduls verwendet werden. Ferner ist auch eine Mg-Legierung in Druckguss möglich, die häufig bei Rennmotoren eingesetzt wird.

Die vorliegende Erfindung bezieht sich auf ein Steuergehäusemodul für eine Verbrennungskraftmaschine, das an einer Stirnseite der Verbrennungskraftmaschine befestigt ist und an dem Nebenaggregate, wie z. B. Wasserpumpe, Ölfilter, Thermostat, Drehstromgenerator, Lenkhilfepumpe, Kühlmittelverdichter, Riemenspanner sowie Umlenkrollen befestigt oder zum Teil integriert sein können. Vorteilhaft gestattet das Steuergehäusemodul möglichst viele zum Teil voneinander abhängige Nebenaggregate optimal zueinander anzuordnen. Dazu wird der Gehäusedeckel mit einem in Kammern aufgeteilten Hohlraum ausgeführt, in denen die jeweiligen Aggregate wie Ölpumpe, Kühlmittelpumpe oder Thermostatventil aufgenommen werden können. Die Kammern werden dabei über Strömungskanäle miteinander verbunden. Weiter sind außerhalb des Hohlraums Aufnahmestrukturen für die anderen Nebenaggregate vorgesehen.

Eine Vielzahl möglicher Ausführungen eines Steuergehäusemoduls ist aus DE 196 12 360 C1, DE 196 35 534 A1, EP 0 843 081 A1, DE 196 47 299 C1, DE 196 35 534 C2 und DE 10 2005 025 882 A1 bekannt, ohne Werkstoffe zu benennen.

So beschreibt beispielsweise die EP 0 843 081 A1 einen Steuergehäusedeckel mit optimiertem Ölkreislauf, bzw. einer verbesserten Integration der Ölpumpe in den Ölkreislauf, um eine externe Steuerung der Ölpumpe zu vermeiden. Dabei weist der Gehäusedeckel reinölseitig hinter einem Ölfilter Kanäle auf, die zu einem Zylinderkurbelgehäuse führen, wobei die Zuleitung auf der Reinölseite des Olfilters zur Steuerung der Ölpumpe zu derselben zurückgeführt ist.

Ferner offenbart die DD 211 146 A1 eine Ausführungsform eines Steuergehäusedeckels mit Verrippungen zur Senkung der Geräuschemissionen.
Aus der EP 1522682 A1 ist ein Modul zum Antreiben einer Nockenwelle bekannt, welches ein Gehäuse aus faserverstärktem Kunststoff aufweist. Die DE 3606052 A1 offenbart Gehäuseteile aus Kunststoff-Formmassen für Kfz-Antriebsgruppen. Die Teile werden durch Spritzgießen oder Pressen aus Kunststoff-Formmassen gestaltet und sind mit einer vorgefertigten Bewehrung verstärkt.

Ausgehend von diesem Stand der Technik ist es Aufgabe der vorliegenden Erfindung, ein Steuergehäusemodul mit einer Vielzahl von zum Teil integrierten Aufnahme-, Anbindungsstrukturen für Nebenaggregate zu schaffen, das auch gegenüber den Steuergehäusedeckeln aus Leichtmetall weiteres Gewichtseinsparungspotential aufweist und zur Kostenverringerung beiträgt.

Diese Aufgabe wird durch ein Steuergehäusemodul mit den Merkmalen des Anspruchs 1 und mit einem Verfahren mit den Merkmalen des Anspruchs 8 gelöst. Weiterbildungen sind in den Unteransprüchen ausgeführt.

Eine erste Ausführungsform bezieht sich auf ein Steuergehäusemodul für eine Verbrennungskraftmaschine. Das Steuergehäusemodul weist Integrations- und/oder Anbindungs- und/oder Aufnahmestrukturen für die Nebenaggregate sowie eine Rippenstruktur auf. Bei den Nebenaggregaten, die an dem Steuergehäusemodul zu befestigen sind oder die zumindest teilweise darin integriert vorliegen, kann es sich um einen Radialwellendichtring für eine Kurbelwelle, eine Wasserpumpe, einen Kühlmittelkompressor, einen Generator, einen Ölfilter, einen Leitungskanal für Kühlmittel und/oder eine Ötwannenanbindung handeln. Das erfindungsgemäße Steuergehäusemodul besteht aus einem Faser-Kunststoff-Verbund, der zumindest einen imprägnierten und konsolidierten Einleger aus einem flächigen Fasertextil in einer thermoplastischen Kunststoffmatrix aufweist. Die Rippenstruktur besteht aus Verstärkungsrippen, die aus einem thermoplastischen Kunststoff an den Einleger angespritzt sind. Der thermoplastische Kunststoff der Verstärkungsrippen umfasst Kurzfasern aus einem Verstärkungsmaterial mit einem Volumenanteil von zumindest 30 %. Der Fasergehalt senkt die Kriechneigung der angespritzten Verstärkungsrippen des Steuergehäusemoduls und verbessert somit dessen Formbeständigkeit auch bei erhöhter Temperatur.

So stellt das FVK-Steuergehäusemodul für eine Verbrennungskraftmaschine in der metallsubstituierenden Faser-Kunststoff-Verbundbauweise mit den hochkurzfasergefüllten thermoplastischen Kunststoffrippen ein kostengünstigeres Steuergehäusemodul mit weiter verringertem Gewicht bereit, das dadurch den wachsenden Anforderungen bezüglich des Kraftstoffverbrauchs und der Abgasemission in der Automobilindustrie gerecht wird.

In einer Ausführungsform des Steuergehäusemoduls kann ein Faservolumengehalt von 30 % ausreichend sein, der Volumenanteil der Kurzfasern kann aber in weiteren Ausführungsformen auch 40 % oder mehr, beispielsweise 50 % oder 60 % oder noch mehr, etwa bis zu 90 % betragen, solange sichergestellt ist, dass der faserhaltige Thermoplast spritzbar ist.

Aufgrund des Einsatzes in der Nähe eines Verbrennungsmotors weisen geeignete thermoplastische Kunststoffmaterialien für die Matrix und/oder die Rippen eine hohe Wärmeformbeständigkeit auf, wie etwa Polyamid, Polyphenylensulfid, Polyphthalamid, Polyetheretherketon und Kombinationen davon. Weitere zum Einsatz bei hohen Temperaturen geeignete Thermoplasten sind Polysulfon, Polyetherimid und Polytetrafluorethen.

Die das Steuergehäusemodul versteifende Verrippung kann zum einen kraftflussgerecht orientierte Rippenstrukturen als auch regelmäßig geformte Längs-, Quer-, und/oder Diagonalverstärkungsrippen umfassen, die sich sogar kreuzen können. Zur besseren Schallund/oder Wärmedämmung können die von den Rippen begrenzten Zwischenrippenräume mit einem Schaummaterial, insbesondere aus Polyamid oder Polyurethan, ausgeschäumt sein.

Das Steuergehäusemodul kann zumindest abschnittsweise auf der von dem Einleger abgewandten Seite der Rippen und alternativ oder zusätzlich auf der von den Rippen abgewandten Seite des Einlegers mit einer flächigen Verstärkungsstruktur versehen sein. Diese zusätzliche Verstärkungsstruktur kann vor allem in Bereichen erhöhter Krafteinleitung wie den Anbindungsbereichen für den Kühlmittelkompressor und den Generator an dem Steuergehäusemodul sinnvoll sein, es ist aber auch eine vollflächige Abdeckung der Verrippungsstruktur mit der flächigen Verstärkungsstruktur denkbar.

Bei der flächigen Verstärkungsstruktur kann es sich um eine entsprechend dem Kraftfluss zugeschnittene faserverstärkte Thermoplastplatte wie ein Organoblech handeln. Unter "Organoblechen" werden plattenförmige endlosfaserverstärkte Thermoplasthalbzeuge verstanden, die sich thermoformen lassen, kurze Prozesszyklen ermöglichen und sich außerdem gut schweißen lassen. Organobleche können dabei aus speziellen Faseranordnungen, die Fasern in definierten Orientierungen aufweisen, eingebettet in der Thermoplastmatrix bestehen. So kann es sich bei den Faseranordnungen um Gewebe, Gelege, Gestricke etc. handeln.

Ferner kann eine flächige Verstärkungsstruktur alternativ zu dem Organoblech oder in Kombination damit aus einem mit einem thermoplastischen Kunststoff vorimprägnierten und vorkonsolidierten entsprechend einem Kraftfluss gefertigten TFP-Textil handeln. Mittels des "Tailored Fiber Placements" lassen sich Textileinleger ohne Verschnitt mit den gewünschten kraftflussorientierten Fasern herstellen. Eine weitere Alternative besteht in einer Anordnung von entsprechend dem Kraftfluss abgelegten Prepregbändchen aus Verstärkungsfasern in thermoplastischer Matrix, wobei diese flächige Verstärkungsstruktur aus den Prepregbändchen erst direkt auf dem Einleger entsteht.

Die flächige Verstärkungsstruktur kann mittels des enthaltenen thermoplastischen Kunststoffs direkt mit den Rippen und/oder dem Einleger verbunden sein, es kann aber auch eine zusätzliche thermoplastische Schicht als Verbindungsschicht vorgesehen sein.

Bei dem thermoplastischen Kunststoff der Thermoplastplatte, des vorimprägnierten TFP-Textils, der Prepregbändchen und/oder der Schicht (12') kann es sich, entsprechend dem Einleger und der Rippen, ebenfalls um einen wärmeformbeständigen thermoplastischen Kunststoff wie Polyamid, Polyphenylensulfid, Polyphthalamid, Polyetheretherketon und Kombinationen davon handeln. Entsprechend der Rippen kann der thermoplastische Kunststoff einer Verbindungsschicht ebenfalls Kurzfasern aus einem Verstärkungsmaterial in einem Volumenanteil von zumindest 30 % umfassen.

In einer Ausführungsform kann das Steuergehäusemodul quasi aus zwei Teil-Bauteilen zusammengesetzt werden, von denen jedes einen Einleger in thermoplastischer Matrix mit der angespritzten Rippenstruktur aufweist. Diese beiden Teil-Bauteile sind über die Rippenstrukturen miteinander verbunden, beispielsweise verschweißt.

Auch den Einsatz von zumindest zwei Einlegern erfordert eine Ausführungsform des Steuergehäusemoduls, in der ein erster Einleger einen umgeformten Abschnitt als ein Halbprofil bereitstellt, das durch den zweiten Einleger zu einem Hohlprofil ergänzt wird, der dazu mit dem ersten Einleger verbunden ist.

So kann das Steuergehäusemodul auch zumindest ein FVK-Rohr als in den Einleger integrierten Leitungskanal aufweisen. Ebenfalls Verwendung kann ein in den Einleger integriertes FVK-Rohr als dessen Randverstärkung finden.

Der imprägnierte und konsolidierte Einleger aus einem flächigen Fasertextil in einer thermoplastischen Kunststoffmatrix ist vorzugsweise ein Organoblech, wobei das flächige Fasertextil ein Gelege oder ein Gewebe, insbesondere in Atlas-, Köper- oder Leinenbindung, aus Verstärkungsfasern ist, die Glas-, Kohlenstoff- und/oder Polymer-, insbesondere Aramidfasern sind.

Zur Herstellung des Steuergehäusemoduls wird zunächst ein flächiges Fasertextil in einer thermoplastischen Kunststoffmatrix entsprechend dem Steuergehäusemodul zu dem imprägnierten und konsolidierten Einleger zugeschnitten. Dieser wird zumindest bis zur Verformbarkeit erwärmt und in ein Spritzgießwerkzeug eingelegt. Gegebenenfalls kann der Einleger schon vor dem Einlegen in das Spritzgießwerkzeug vorgeformt werden. Im Sprotzgießwerkzeug dann erhält der Einleger nach Schließen der Werkzeughälften seine endgültige Form. Sodann wird dort zumindest die vorgesehene Verrippung aus dem thermoplastischen Kunststoff, der Kurzfasern aus einem Verstärkungsmaterial in einem Volumenanteil von zumindest 30 % umfasst, angespritzt. Bekannter Maßen ergibt sich bei Verwendung von thermoplastischen Kunststoffmaterialien für Matrix und Verrippung mit ähnlichen oder entsprechenden Eigenschaften (z. B. Schmelztemperatur) insbesondere bei Verwendung des gleichen thermoplastischen Kunststoffmaterials für Matrix und Verrippung eine besonders gute Anbindung der Verrippung, nämlich eine stoffschlüssige Verbindung an den durch den Einleger gebildeten Grundkörper des Bauteils. Dies kann unterstützt werden, wenn im Werkzeug die Matrix des Einlegers zumindest oberflächlich angeschmolzen wird. Nach dem Aushärten der Verrippung kann das Steuergehäusemodul aus dem Spritzgießwerkzeug entformt werden.

Weitere erfindungsgemäße Ausführungsformen des Verfahrens umfassen zumindest einen der folgenden Schritte:

Beim Zuschneiden, Formen und/oder Anspritzen werden Integrations- und/oder Anbindungs- und/oder Aufnahmestrukturen ausgebildet, wobei das Fertigen von Hinterschneidungen mittels eines mehrteiligen Spritzgießwerkzeugs umfasst sein kann.

Ferner kann unmittelbar nach Bildung der Rippen, auch im gleichen Spritzgießwerkzeug, das Ausschäumen der Zwischenrippenräume, etwa mit PA oder PUR erfolgen.

Das Anordnen und Verbinden einer flächigen Verstärkungsstruktur auf der von dem Einleger abgewandten Seite der Rippen und/oder der von den Rippen abgewandten Seite des Einlegers, beispielsweise durch Anschweißen mittels einer thermoplastischen Schicht wird nach Beendigung des Spritzgießzyklus', etwa nach dem Entformen des Bauteils stattfinden. Ist die flächige Verstärkungsstruktur auf der von den Rippen abgewandten Seite des Einlegers vorgesehen, dann kann die Anordnung derselben auch vor dem Spritzgießen stattfinden.

Ferner kann die Herstellung des Bauteils das Verbinden von zumindest zwei mit einer angespritzten Rippenstruktur ausgestatteten Einlegern durch Verschweißen an den Rippen umfassen.

Die Bildung eines integrierten Hohlprofils in dem Bauteil kann vor dem Spritzgießzyklus durch das Verbinden von zumindest zwei Einlegern erfolgen, alternativ oder zusätzlich kann ein FVK-Rohr in den Einleger als Leitungskanal integriert werden. Ein FVK-Rohr kann ferner als Randverstärkung verwendet werden; zu diesem Zweck wird das FVK-Rohr mit dem Textileinleger am Rand umwickelt.

Diese und weitere Vorteile werden durch die nachfolgende Beschreibung unter Bezug auf die begleitenden Figuren dargelegt.

Der Bezug auf die Figuren in der Beschreibung dient der Unterstützung der Beschreibung und dem erleichterten Verständnis des Gegenstands. Die Figuren sind lediglich eine schematische Darstellung einer Ausführungsform der Erfindung. Dabei zeigt:
- Fig. 1: eine schematische Seiten- und Frontansicht auf ein Steuergehäusemodul, das an der Stirnseite einer Verbrennungskraftmaschine angeordnet ist,
- Fig. 2: eine perspektivische Darstellung eines Steuergehäusemoduls aus Al-Si-Druckguss mit Anbindungselementen,
- Fig. 3 a,b: schematische Frontansichten von zwei erfindungsgemäß ausgeführten Steuergehäusemodulen,
- Fig. 4: eine schematische Frontansicht eines weiteren erfindungsgemäß ausgeführten Steuergehäusemoduls,
- Fig. 5 a,b,c: Seitenschnittansichten von drei erfindungsgemäß ausgeführten Steuergehäusemodulen,
- Fig. 6a,b: eine Seitenschnittansicht durch eine modifizierte faserverstärkte Thermoplastplatte und eine Seitenschnittansicht durch einen Abschnitt eines Steuergehäusemoduls mit zusätzlicher Verstärkung durch eine aufgeschweißte faserverstärkte Thermoplastplatte,
- Fig. 7: eine schematische Front- und Seitenschnittansicht eines weiteren erfindungsgemäß ausgeführten Steuergehäusemoduls,
- Fig. 8: Prozessschritte a) bis f) für das Verschweißen zweier Halbschalen direkt in dem Spritzgießwerkzeug ("ENGEL joinmelt")
- Fig.: 9 a,b eine schematische Front- und eine Seitenschnittansicht eines weiteren erfindungsgemäß ausgeführten Steuergehäusemoduls aus zwei zusammengeschweißten Halbmodulen nach dem Prozess aus Fig. 8,
- Fig. 10: in perspektivischer Ansicht einen Sandwichaufbau (A), bestehend aus den Lagen Textileinleger, Strukturkern und faserverstärkte Thermoplastplatte (B),
- Fig. 11: mögliche Ausführungen des Strukturkems aus Fig. 10,
- Fig. 12: eine schematische Seitenschnittansicht durch einen Abschnitt des Steuergehäusemoduls mit teilintegrierter Wasserpumpe und zugehöriger Kühlmittelleitung,
- Fig. 13: eine schematische Seitenschnittansicht durch einen Abschnitt des Steuergehäusemoduls mit einer vollständig oder zum Teil in die Struktur integrierten Kühlmittelleitung der Wasserpumpe als FVK-Rohr,
- Fig. 14: ein Beispiel für einen abgewickelten Organoblecheinleger,
- Fig. 15a,b,c: einen prinzipiellen Verfahrensablauf beim Hinterspritzen eines Organoblecheinlegers,
- Fig. 16: eine Prinzipdarstellung des Tape-Legens,
- Fig. 17: ein Beispiel für einen Multi-Tape-Legekopf,
- Fig. 18: eine Schnittansicht durch ein geschlossenes und mit Rippen umspritztes Kastenprofil aus zwei mit Sicken versehenen Organoblechen,
- Fig. 19: eine perspektivische Skizze einer Randverstärkung eines Organoblecheinlegers mittels Umwicklung eines FVK-Hohlprofils,
- Fig. 20: eine perspektivische Ansicht eines erfindungsgemäß ausgeführten Steuergehäusemoduls,
- Fig. 21: eine perspektivische Ansicht eines weiteren erfindungsgemäß ausgeführten Steuergehäusemoduls.

Die erfindungsgemäße Vorrichtung bezieht sich auf ein FVK-Steuergehäusemodul in Faser-Kunststoff-Verbundbauweise auf Basis einer hochkurzfasergefüllten thermoplastischen Matrix. Geeignete Fasermaterialien umfassen Glas, Carbon und Polymerfasern, insbesondere Aramid. Es können auch Kombinationen der Fasermaterialien eingesetzt werden. Weitere Fasermaterialien, die zumindest anteilsmäßig eingesetzt werden können, umfassen Metallfasern, Naturfasern, Keramikfasern, Basaltfasern etc.

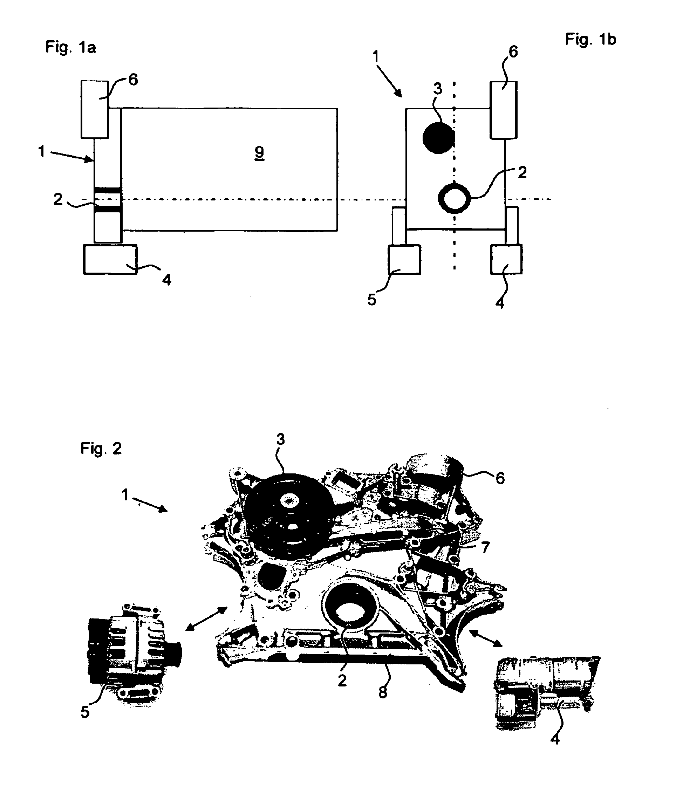

Wie in Fig. 1 links prinzipiell dargestellt ist, wird das FVK-Steuergehäusemodul 1 an einer Stirnseite einer Verbrennungskraftmaschine 9 befestigt. Dabei sind an dem Steuergehäusemodul 1 Nebenaggregate, wie z. B. Wasserpumpe 3, Ölfilter 6, Thermostat, Drehstromgenerator 5, Lenkhilfepumpe, Kühlmittelverdichter 4, Riemenspanner sowie Umlenkrollen befestigt oder können zum Teil integriert sein, wie auch Fig. 2 zeigt. Dort ist auch zu sehen, dass einige Komponenten zumindest teilweise integriert vorliegen können, wie der Ölfilter 6 und ein Leitungskanal 7 für eine Wasserpumpe. Ferner ist ein Radialwellendichtring 2 für die Kurbelwelle zu sehen, und die Anbindungsstruktur 8 für die Verbindung zur Ölwanne. Andere Nebenaggregate wie der Kühlmittelkompressor 4 und der Generator 5 werden an entsprechenden Anbindungsstrukturen befestigt.

Fig. 2 zeigt dabei ein im Druckguss hergestelltes Steuergehäusemodul 1 aus einer Al-Si-Legierung nach dem Stand der Technik.

Aufgrund wachsender Anforderungen bezüglich des Kraftstoffverbrauchs und der Abgasemission in der Automobilindustrie ermöglicht das erfindungsgemäße FVK-Steuergehäusemodul 1 mit den entsprechenden Anbindungsstrukturen für die integrierten Nebenaggregate durch die Substitution der Metallkomponenten durch ein Faser-Kunststoff-Verbund eine Kosten- und Gewichtsreduktion und damit die Möglichkeit zur Umsetzung eines konsequenten Leichtbaus im Motorbereich.

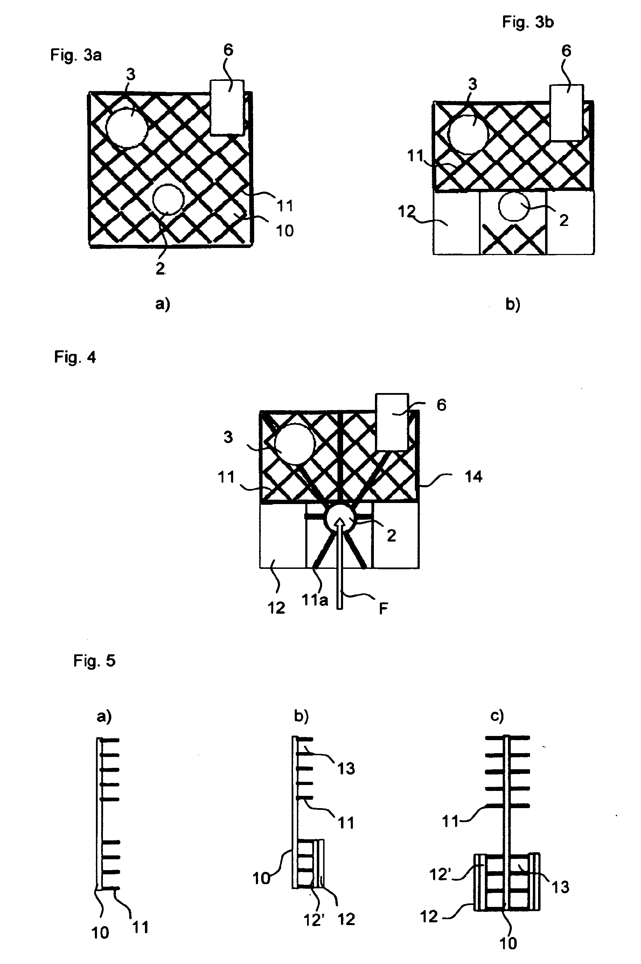

Ein erfindungsgemäßes Steuergehäusemodul 1, wie in der Prinzipdarstellung von Fig. 3 zu sehen, besteht im Wesentlichen aus einem Organoblech-Einleger 10, der in einer Spritzgießmaschine mit einem hochkurzfasergefüllten (z. B. 30 %, 40 %, 60 % Faservolumenanteil) Thermoplasten (z. B. Polyamid, Polyphenylensulfid/ Polyphthalamid, Polyetheretherketon, etc.) mit Rippen 11 umspritzt wird und dadurch seine endgültige Geometrie erhält. Bevorzugte Thermoplasten haben dabei eine hohe Wärmeformbeständigkeit und eine gute Dimensionsstabilität, sowie vorteilhaft hohe Festigkeitswerte. Mögliche Hinterschneidungen, wie z. B. bei der Anbindung des Ölfilters 6, der Anbindung der Wasserpumpe 3 oder einer Aufnahme 2 für die Radialwellendichtung können mit Hilfe von mehrteiligen Spritzgießwerkzeugen realisiert werden.

Organobleche 12 sind textile Flächenhalbzeuge (z. B. Gelege, Gewebe aus Verstärkungsfasern, etwa Glas-, Kohlenstoff- und/oder Aramidfasem), die mit einem thermoplastischen Kunststoff vorimprägniert und konsolidiert sind. Als weitere Fasertextilien kommen aber auch Geflechte und Gestricke etc. in Frage, und weitere Fasermaterialien, die alternativ oder in Kombination eingesetzt werden können, sind Metallfasern wie Stahlfasern oder auch Keramikfasern, Naturfasern, basaltfasern oder Polymerfasern. Die Fasern der Fasertextilien können nur in einer Richtung orientiert oder in zwei Richtungen in beliebigem Winkel zueinander, beispielsweise rechtwinklig zueinander, orientiert sein.

In Fig. 3a) ist ein erfindungsgemäßes Steuergehäusemodul 1 zu sehen, das lediglich mit den Rippen 11 verstärkt ist, während rechts in Fig. 3b) zusätzliche lokale Verstärkungen durch angeschweißte faserverstärkte Thermoplastplatten 12, die ebenfalls Organobleche sein können, vorgesehen sind. In Fig. 5 sind unter a) und b) die entsprechenden Schnitte dazu dargestellt, die längs durch das Steuergehäusemodul 1 liegen. Die faserverstärkten Thermoplastplatten 12 sind mittels einer Verbindungs- bzw. Schweißschicht 12' mit den Rippenstrukturen 11 verbunden.

Wie Fig. 4 zeigt, kann die Verrippung des Einlegers 10 in zwei unterschiedlichen Ebenen erfolgen. Als primäre, unregelmäßig geformte Verstärkung kann eine topologisch optimierte Struktur 11a gemäß dem Hauptkraftfluss erfolgen. Diese Struktur 11a dient zur Aufnahme der Hauptlasten, angedeutet durch die Beispiellast F. Die sekundäre, regelmäßig geformte Rippenstruktur 11 zur Verstärkung dient zusammen mit dem Rahmen 14 primär zur Versteifung des Steuergehäusemoduls 1 gegen Biege- und Torsionsbelastung. Durch das Einbringen von Sicken in die Geometrie des Einlegers kann die Struktur zusätzlich versteift werden. Durch eine geschickte Gestaltung kann die Verrippung zudem zu einer Geräuschreduzierung führen.

Des Weiteren kann der Raum 13 zwischen den Rippen 11 zusätzlich durch einen Kunststoffschaum beispielsweise aus einem Polyamid oder einem Polyurethan nachträglich oder während des eigentlichen Spritzgießprozesses (z. B. im 2-K-Spritzgießen von kompatiblen Thermoplasten) gefüllt werden, vgl. Fig. 5b. Dieser kann, in Abhängigkeit vom Porengehalt, der Porendichte sowie der Porengeometrie eine zusätzliche Schallisolierung bewirken. Dabei eignen sich offenzellige Schäume besonders gut für eine Schallisolation, geschlossenzellige dagegen für eine thermische Isolation. Falls notwendig, kann die Verrippung 11 auch auf beiden Seiten des Einlegers 10 erfolgen. In Fig. 5c) ist dieser Fall skizziert, wobei zusätzlich die versteifende Sandwichbildung mit weiteren Organoblechen 12 dargestellt ist. Auch hier können Zwischenrippenräume 13 ausgeschäumt sein.

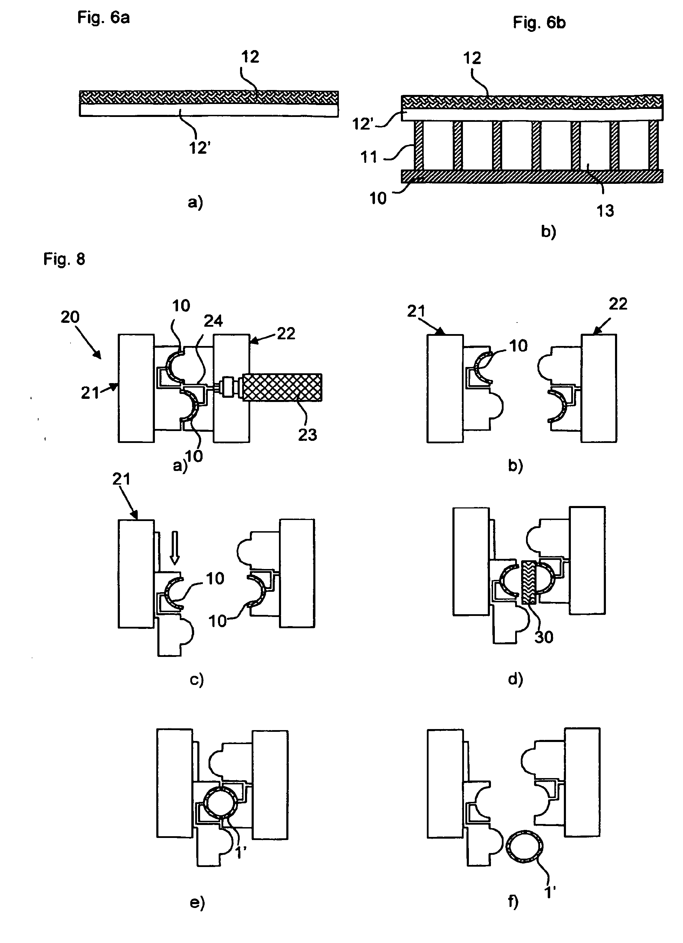

Die Sandwichbildung mit den angeschweißten Organoblechen 12 kann dabei an besonders belasteten Stellen wie etwa der Anbindung von Generator 5 und Kühlmittelkompressor 4, vgl. Fig. 2, erfolgen, dort können die Organobleche 12 auf die Rippenstruktur 11 lokal angeschweißt werden (z. B. durch Infrarot-, Heißgasschweißen), so dass die Organobleche 12 zusammen mit der Verrippung 11 und dem Einleger 10 eine versteifende Sandwich-Struktur bilden (Fig. 5 und 6).

Die Organobleche 12 können schweißbar gemacht werden, indem sie beispielsweise wie in Fig. 6a) dargestellt, auf einer Seite mit einer extrudierten thermoplastischen Folie 12' beim Herstellprozess durch heiße Walzen verbunden werden. Diese thermoplastische Folie 12' kann wie die thermoplastische Kunststoffmatrix des Organoblechs 12 beispielsweise aus Polyamid, Polyphenylensulfid/ Polyphthalamid, Polyetheretherketon bestehen, es sind aber auch weitere Thermoplasten denkbar. Die thermoplastische Kunststoffmatrix des Organoblechs 12, die thermoplastische Folie 12'und die angespritzte Rippenstruktur 11 können den gleichen Thermoplastkunststoff umfassen, es kann sich aber auch um unterschiedliche Thermoplasten handeln. Wie das Thermoplastmaterial der Rippen 11 kann auch die thermoplastische Folie 12' hochkurzfasergefüllt sein kann (z. B. mit einem Faservolumenanteil von 30 %, 40 % oder 60 %).

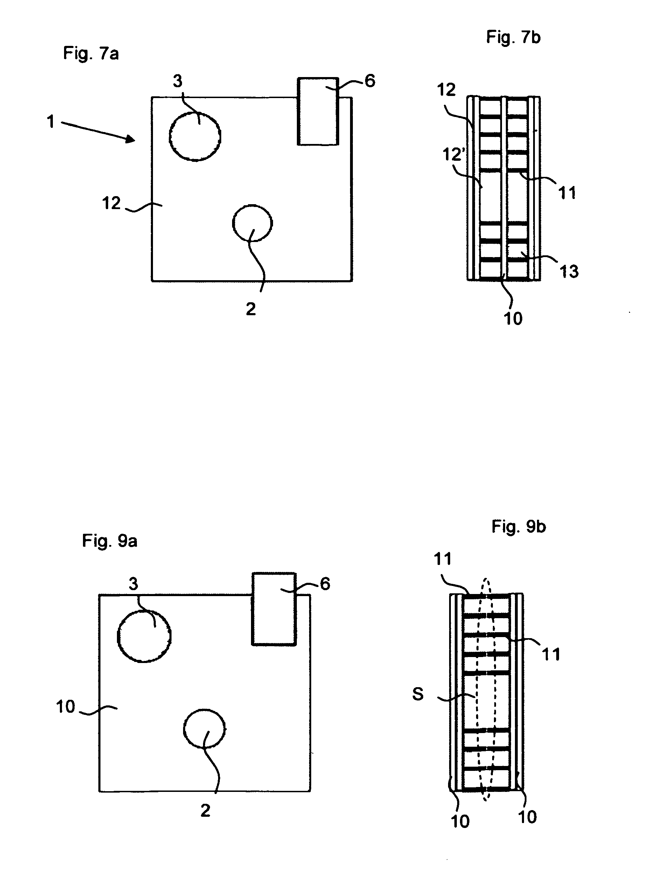

Das Steuergehäusemodul 1 kann ferner als komplette Sandwich-Konstruktion und damit als Kastenprofil mit den Organoblechen 12 als "Deckeln" gefertigt werden, Fig. 7 zeigt dazu Draufsicht und Längsschnitt. Der Organoblech-Einleger 10 wird beidseitig mit Rippen 11 umspritzt, auf die jeweils die Organobleche 12 mit der thermoplastischen Folie 12' angeschweißt werden. Auch hier können die Zwischenräume 13 zwischen den Rippen 11 ausgeschäumt sein.

Ein weiterer Herstellungsweg ist in Fig. 8 a) bis f) dargestellt und besteht darin, zwei Einleger 10 zeitgleich in einem Werkzeug 20 mittels eines Angusssystems 23,24 mit Rippen zu umspritzen (a), die Werkzeughälften 21,22 auseinander zu fahren (b), so dass jeweils ein Einleger 10 in einer Formschale jeder Werkzeughälfte 21,22 verbleibt und eine Werkzeughälfte 21 abzusenken, so dass sich die beiden Einleger 10 gegenüberliegen (c). Nach einer Kühlphase zur Aushärtung werden diese beiden Einleger 10 mittels einer Heizvorrichtung 30 im selben Werkzeug 20 an den Berührungsflächen der Rippen erwärmt (d) etwa mittels Infrarot oder Heißgas und miteinander verschweißt (e) durch Zusammenfahren der Werkzeughälften 21,22. Danach kann das fertige Bauteil 1', das in Fig. 8 ein Rohrprofil ist, entformt werden. Das in Fig. 8 skizzierte Verfahren zum HeißGas-Schweißen direkt in der Spritzgießform wurde von den Firmen Engel, Hummel-Formen und KVT Bielefeld entwickelt und ist unter dem Namen "ENGEL joinmelt" bekannt.

Ein auf diese Weise herstellbares Steuergehäusemodul 1 ist in Fig. 9 dargestellt. An zwei Organoblech-Einlegern 10 sind einseitig die Rippenstrukturen 11 angespritzt, und beide Hälften an den Berührungsflächen der Rippen 11 miteinander verschweißt (indizierter Bereich S).

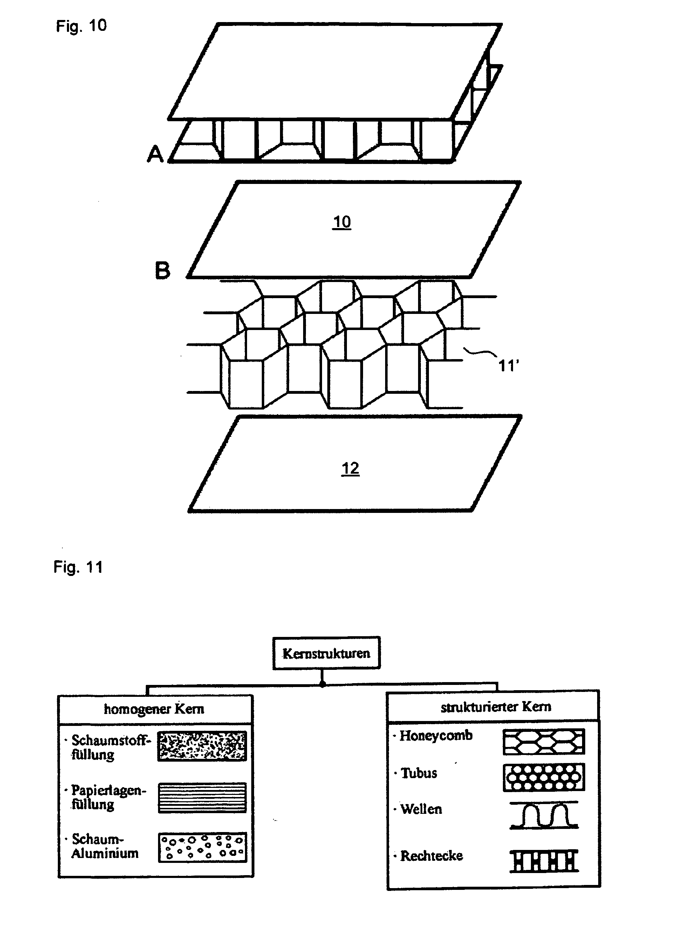

Generell könnte zwischen dem Einleger 10 und dem äußeren Organoblech 12 anstelle der Rippenstruktur 11 auch ein Strukturkern 11 als Abstandshalter für die SandwichStruktur eingesetzt werden (Fig. 10). Bei einem solchen Ausführungsbeispiel handelt es sich aber nicht um einem Teil der Erfindung, da eine Rippenstruktur nicht vorhanden ist. Mögliche Ausführungen für einen Strukturkern 11 sind in Fig. 11 dargestellt.

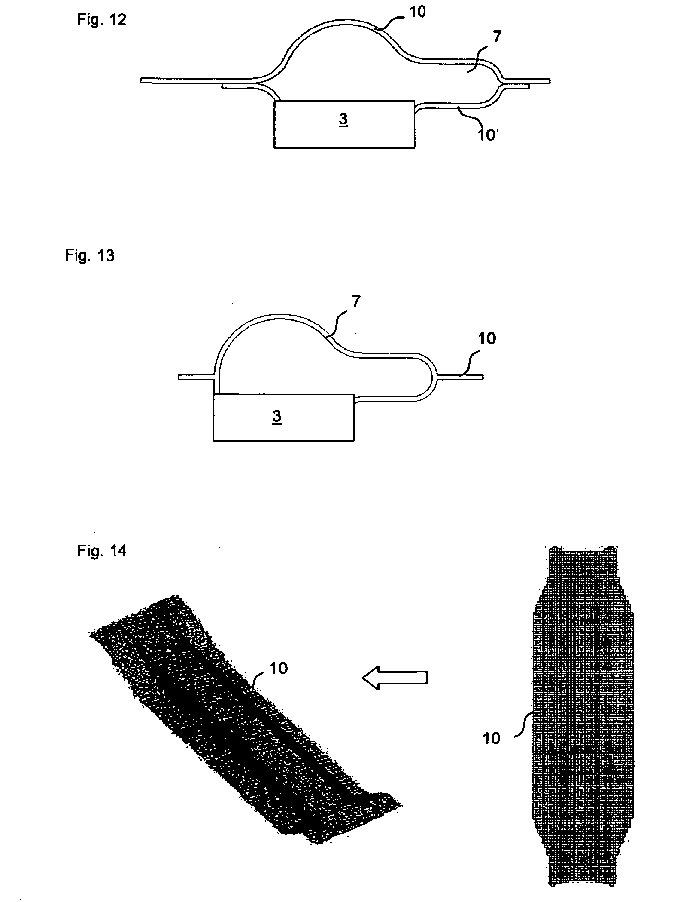

Für eine Teilintegration von Nebenaggregaten (z. B. Wasserpumpe 3) kann der Einleger 10 durch einen Umformprozess entsprechend der einen Hälfte der zu integrierenden Komponente geformt sein, wobei die zweite Hälfte 10' auf dem Steuergehäusemodul befestigt wird (Fig. 12). Durch die Verbindung des umgeformten Abschnitts des Einlegers 10 und der zweiten Hälfte 10', die die Teilintegration der Wasserpumpe 3 gestattet, wird eine integrierte Kühlmittelleitung 7 geschaffen. Bei einer Integration der Wasserpumpe 3 kann, wie in Fig. 13 skizziert, die notwendige Kühlmittelleitung 7 vollständig oder zum Teil durch ein FVK-Rohr 7 in die mit Rippen umspritzte Einlegerstruktur 10 integriert werden. Dabei kann das FVK-Rohr 7 entweder in einem vorhergehenden Schritt oder auch direkt im Spritzgießwerkzeug konsolidiert und mit Rippen umspritzt werden.

Dazu verwendete FVK-Rohrhalbzeuge können kontinuierlich im Flechtverfahren hergestellt werden. Die Formgebung und Konsolidierung kann alternativ über die Projektilinjektionstechnik (PIT), die Wasser- bzw. Gasinjektionstechnik (WIT/GIT), das Kernausschmelzverfahren oder auch das Schlauchblasverfahren erfolgen. Weitere Verfahrensvarianten sind die Flechtpultrusion oder das laserunterstützte Thermoplastwickeln.

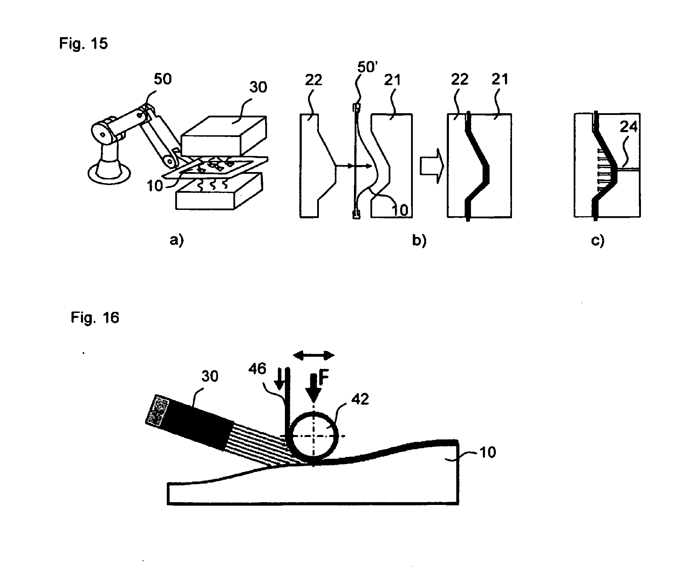

Der Einleger 10 aus einem flächigen faserverstärkten Thermoplasten ist vorzugsweise ein Organoblech-Einleger 10 aus z. B. Glas-, Kohlenstoff- oder Aramidfasergelegen in z. B. Atlas-, Köper-, Leinenbindung imprägniert und konsolidiert in einer thermoplastischen Matrix (z. B. PA, PPS/PPA, PEEK). Hierbei wird der Einleger 10 zunächst zurecht geschnitten (Konfektionierung) (Fig. 14, rechts). Der steife Organoblech-Zuschnitt 10 wird dann beispielsweise mittels Infrarot aufgewärmt vorgeformt (Fig. 14, links, dort ist allerdings kein Steuergehäusemodul dargestellt, sondern nur beispielhaft ein umgeformter Organoblechzuschnitt). Das Erwärmen des Organoblechs 10 ist in Fig. 15 in der ersten Station a) dargestellt. Ein Roboter 50 bewegt den Organoblech-Zuschnitt 10 zur Heizvorrichtung 30 und kann dann, nachdem der thermoplastische Matrixkunststoff erweicht bzw. fließfähig gemacht wurde, den Organoblech-Zuschnitt 10 gegebenenfalls bereits mittels geeigneter Greifer 50' vorformen, ehe dieser in das Spritzgießwerkzeug 21,22 eingelegt und dort beim Schließen des Werkzeugs 21,22 vollständig umgeformt wird (Fig. 15b). Zum Schluss wird das vollständig umgeformte Halbzeug durch das Angusssystem des Werkzeugs mit Rippen umspritzt (c), womit das Bauteil auf seine endgültige Geometrie gebracht wird.

An lokal stark belasteten Stellen des Steuergehäusemoduls 1, wie z. B. an den Anbindungsstellen von Generator 5 und Kühlmittelkompressor 4 (vgl. Fig. 1 bis 4), können zudem entsprechend dem Kraftfluss zugeschnittene Deckschichten (figurativ nicht dargestellt), ebenfalls aus einem Organoblech oder aus einem vorimprägnierten und vorkonsolidierten TFP-Textil, an den Organoblech-Einleger angeschweißt werden (z. B. über Infrarot-, Heißgasschweißen). Ein TFP-Einleger ("Tailored Fiber Placement"), wird mit im Wesentlichen kraftflussorientiert ausgerichteten, auf einer Tragschicht abgelegten Fasersträngen hergestellt, die mit Fixierfäden angeheftet werden, um das TFP-Textil mit einer nahezu beliebigen Materialstärke zu bilden

Dies kann entweder vor oder auch nach dem Spritzgießprozess erfolgen, wobei nach dem Spritzgießprozess die zusätzlichen verstärkenden Deckschichtstrukturen ausschließlich auf der von der Rippenstruktur abgewandten Seite angebracht werden können.

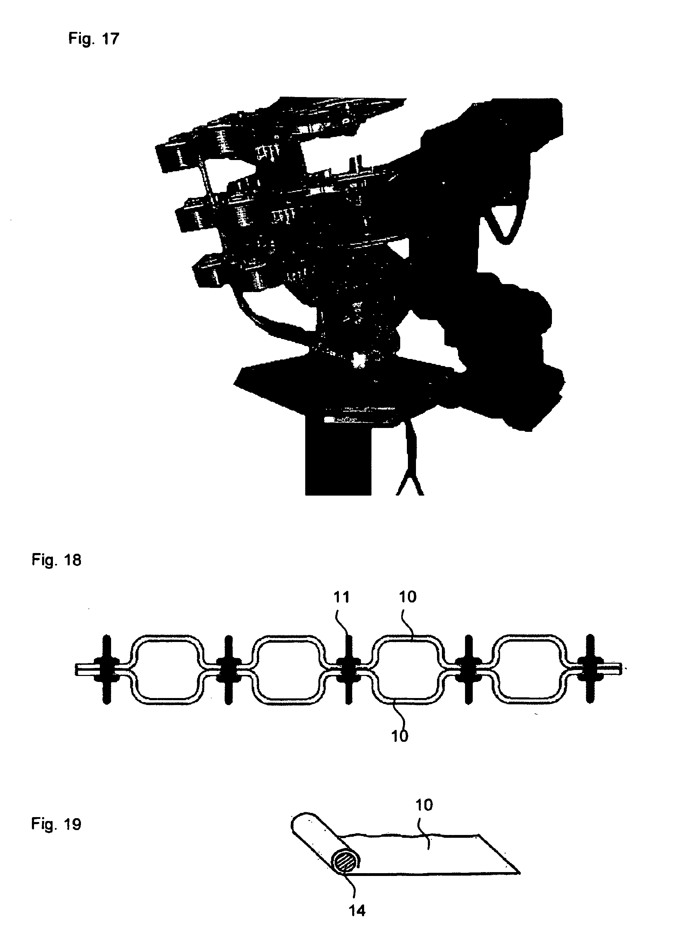

Weiterhin ist es ebenfalls möglich Prepregbändchen (sog. Tapes), bestehend aus Faserrovings, die z. B. Glas-, Kohlenstoff- und/oder Aramidfasern umfassen, die mit einer thermoplastischen Matrix (z. B. PA, PPS/PPA, PEEK) vorimprägniert sind, im sog. Tapelegeverfahren entsprechend des Kraftflusses als Verstärkungsstruktur vor oder auch nach dem Spritzgießprozess auf den Organoblech-Einleger 10 abzulegen. Fig. 16 zeigt, wie ein Prepregbändchen bzw. Tape 46 von einer Spule abgezogen wird, auf Prozesstemperatur , beispielsweise durch den gezeigten Laser 30, erwärmt und durch eine Andruckrolle 42 direkt auf die Form 10 angeschweißt wird. Durch die konzentrierte Wärmeeinbringung wird das Matrixmaterial des Prepregbändchens 46 aufgeschmolzen und die Fasern durch den aufgebrachten Druck optimal in die Matrix eingebettet und dadurch mit dem Organoblech-Einleger 10 verbunden. Das Verfahren kann zudem durch die Verwendung mehrerer, parallel angeordneter Tapelegeköpfe, beispielsweise mit einem wie in Fig. 17 gezeigten Multi-Tapelegekopf, wesentlich beschleunigt werden.

Um eine hohe Biege- und Torsionssteifigkeit zu erreichen, kann das Steuergehäusemodul 1 auch als geschlossenes Kastenprofil ausgeführt sein, bei dem zwei nicht notwendigerweise symmetrische und mit Sicken versehene Halbschalen 10 (vgl. Fig. 18) aus Organoblechen mit der Rippenstruktur 11 aus hochkurzfasergefülltem (z. B. 30 %, 40 %, 60 % Faservolumenanteil) thermoplastischen Kunststoff (z. B. PA 6.6, PPS/PPA, PA 4.6, PEEK) umspritzt und dabei gleichzeitig an in die Schalen 10 eingebrachten Bohrungen gefügt werden. Die beiden Halbschalen 10 werden vor dem Spritzgießprozess auf die Endgeometrie umgeformt.

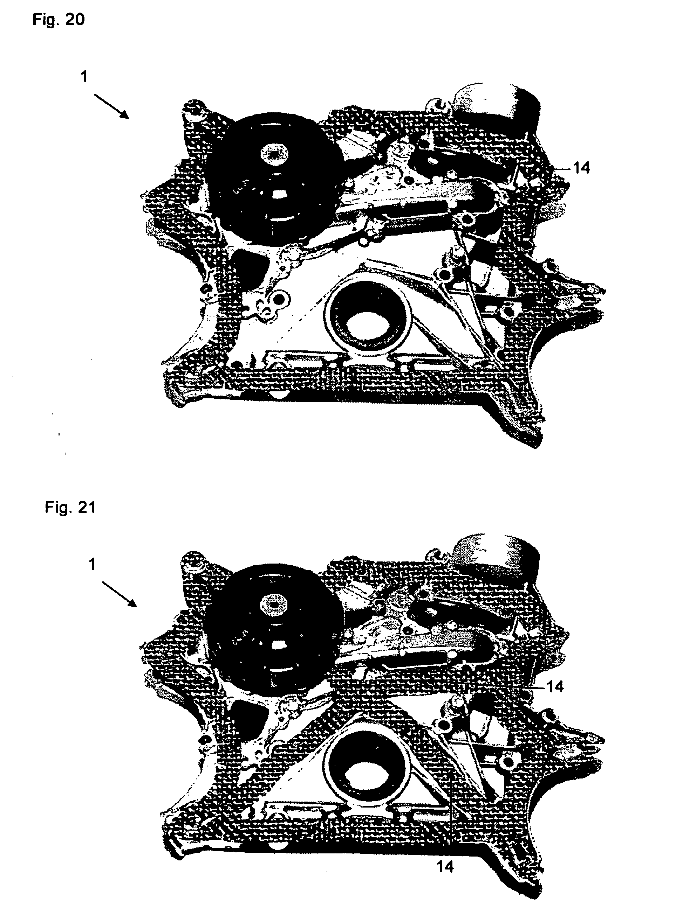

Um die freien Ränder des Einlegers 10 zu stabilisieren, können, wie in Fig. 19 dargestellt, umwickelte oder umspritzte FVK-Rohre 14 mit Hohlquerschnitt als Randversteifungen verwendet werden. Eine Ausführungsform für ein beispielhaftes Steuergehäusemodul 1 ist in Fig. 20 dargestellt. Dort ist eine Randversteifung mit einem FVK-Rohr 14 vorgesehen. Zusätzlich können solche Rohre 14 zur Aufnahme der Hauptlasten auch quer durch das Steuergehäusemodul 1 gelegt werden, wie in Fig. 21 angezeigt.

Durch das Hinterspritzen des Einlegers kann das Steifigkeitsverhalten der auftretenden Beanspruchung angepasst werden. Es wird die Möglichkeit zur Bildung von geschlossenen Profilquerschnitten geschaffen. Der hinterspritzte Einleger bietet gegenüber den Leichtmetall-Steuergehäusemodulen weiteres Gewichtseinsparungspotential, so dass eine weitere Reduzierung des Kraftstoffverbrauchs und damit der Schadstoffemission ermöglicht wird. Zudem ist das FVK-Steuergehäusemodul gegenüber den Leichtmetall-Steuergehäusemodulen kostengünstiger und kann mit hoher Herstellgenauigkeit, auch ohne Nachbearbeitung gefertigt werden. Ferner sind eine Materialdämpfung sowie ein hohes Maß an Funktionsintegration (z. B. integriertes Gewinde) und die Möglichkeit eines Health-Monitoring durch Sensorintegration gegeben.

In der Ausführungsform als Sandwich mit dem zusätzlich auf den Rippen angeordneten Organoblech ergeben sich weitere Möglichkeiten zur Verminderung der Schallemission und/oder der thermischen Isolation sowie eine Erhöhung der Bauteilsteifigkeit.

Weiter lassen sich durch das Anschweißen von Prepregbändchen/Tapes belastungsgerechte Strukturen schaffen.

Die Verwendung eines Organoblechs als Einleger erübrigt den separaten Schritt des Imprägnierens und Konsolidierens eines Textileinlegers. Da für die thermoplastische Matrix des Organoblechs und der angespritzten Rippen (sowie weiterer angeschweißter Elemente wie der flächigen Verstärkungsstrukturen oder der Prepregbändchen) vorzugsweise ein thermoplastischer Kunststoff verwendet wird, der zumindest ähnliche, vorzugsweise gleiche Schmelzeigenschaften aufweist und mischbar ist, kann auf weitere Haftvermittler verzichtet werden. Besonders bevorzugt kann es sich bei den verwendeten thermoplastischen Kunststoffen um den gleichen handeln.

## Patentansprüche

1. Steuergehäusemodul (1) für eine Verbrennungskraftmaschine, das Integrationsund/oder Anbindungs- und/oder Aufnahmestrukturen für Nebenaggregate (2,3,4,5,6,7,8) und eine Rippenstruktur umfasst,
wobei das Steuergehäusemodul (1) aus einem Faser-Kunststoff-Verbund besteht, **dadurch gekennzeichnet, dass** der Faser-Kunststoff-Verbund zumindest einen Einleger (10) aus einem flächigen Fasertextil in einer thermoplastischen Kunststoffmatrix aufweist, dass die Rippenstruktur aus angespritzten Verstärkungsrippen (11,11a) aus einem thermoplastischen Kunststoff besteht, der Kurzfasern aus einem Verstärkungsmaterial mit einem Volumenanteil von zumindest 30 % umfasst,
dass die Verrippung (11,11a) kraftflussgerechte Rippenstrukturen (11a) und regelmäßig geformte sich kreuzende Längs-, Quer-, und/oder Diagonalverstärkungsrippen (11) umfasst,
und dass in den von den Rippen (11,11a) begrenzten Zwischenrippenräumen (13) ein Schaummaterial angeordnet ist.

2. Steuergehäusemodul (1) nach Anspruch 1,
**dadurch gekennzeichnet, dass**
der Volumenanteil der Kurzfasern zumindest 40 %, vorzugsweise zumindest 50 %, besonders bevorzugt zumindest 60 % beträgt.

3. Steuergehäusemodul (1) nach Anspruch 1 oder 2,
**dadurch gekennzeichnet, dass**
das thermoplastische Kunststoffmaterial der Matrix und/oder der Rippen (11,11a) eine hohe Wärmeformbeständigkeit aufweist, und insbesondere aus einer Gruppe ausgewählt ist, die Polyamid, Polyphenylensulfid, Polyphthalamid, Polyetheretherketon und Kombinationen davon umfasst.

4. Steuergehäusemodul (1) nach zumindest einem der Ansprüche 1 bis 3,
**dadurch gekennzeichnet, dass**
das Steuergehäusemodul (1) zumindest abschnittsweise
- auf der von dem Einleger (10) abgewandten Seite der Rippen (11,11a) und/oder
- auf der von den Rippen (11,11a) abgewandten Seite des Einlegers (10) mit einer flächigen Verstärkungsstruktur (12) versehen ist, die
- eine entsprechend einem Kraftfluss zugeschnittene faserverstärkte Thermoplastplatte (12), insbesondere ein Organoblech (12) und/oder
- ein mit einem thermoplastischen Kunststoff vorimprägniertes und vorkonsolidiertes entsprechend einem Kraftfluss gefertigtes TFP-Textil und/oder
- eine Anordnung von entsprechend einem Kraftfluss abgelegten Prepregbändchen aus Verstärkungsfasern in thermoplastischer Matrix
ist,
wobei die flächige Verstärkungsstruktur (12) direkt oder mittels einer thermoplastischen Schicht (12') mit den Rippen(11,11a) und/oder dem Einleger verbunden ist, und wobei
der thermoplastische Kunststoff der Thermoplastplatte (12) des vorimprägnierten TFP-Textils, der Prepregbändchen und/oder der Schicht (12') aus einem wärmeformbeständigen thermoplastischen Kunststoff aus einer Gruppe umfassend Polyamid, Polyphenylensulfid, Polyphthalamid, Polyetheretherketon und Kombinationen davon, besteht, und
wobei die thermoplastische Schicht (12') insbesondere Kurzfasern aus einem Verstärkungsmaterial in einem Volumenanteil von zumindest 30 % umfasst.

5. Steuergehäusemodul (1) nach zumindest einem der Ansprüche 1 bis 4,
**dadurch gekennzeichnet, dass**
das Steuergehäusemodul (1) zumindest zwei Einleger (10,10') umfasst,
- die jeweils mit einer Rippenstruktur (11,11a) ausgestattet und über die Rippenstrukturen (11,11a) miteinander verbunden sind, oder
- von denen ein erster Einleger (10) zumindest einen umgeformten Abschnitt als ein Halbprofil bereitstellt, das mit dem zweiten Einleger (10') verbunden ist, der das Halbprofil zu einem Hohlprofil ergänzt.

6. Steuergehäusemodul (1) nach zumindest einem der Ansprüche 1 bis 5,
**dadurch gekennzeichnet, dass**
das Steuergehäusemodul (1) zumindest ein FVK-Rohr (14) als Randverstärkung und/oder eine in den Einleger (10) integrierte Leitung (7) umfasst.

7. Steuergehäusemodul (1) nach zumindest einem der Ansprüche 1 bis 6,
**dadurch gekennzeichnet, dass**
der Einleger (10) ein Organoblech (10) ist, wobei das flächige Fasertextil ein Gelege oder ein Gewebe, insbesondere in Atlas-, Köper- oder Leinenbindung aus Verstärkungsfasern ist, die Glas-, Kohlenstoff- und/oder Polymer-, insbesondere Aramidfasern sind.

8. Verfahren zur Herstellung eines Steuergehäusemoduls (1) nach zumindest einem der Ansprüche 1 bis 7,
umfassend die Schritte:
- Zuschneiden des flächigen Fasertextils mit thermoplastischer Kunststoffmatrix entsprechend dem Steuergehäusemodul (1) zu dem Einleger (10),
- Erwärmen der thermoplastischen Kunststoffmatrix und ggf. Vorformen und Einlegen des Einlegers (10) in ein Spritzgießwerkzeug (20),
- Schließen des Spritzgießwerkzeugs (20) dabei Formen des Einlegers (10),
- Anspritzen zumindest der Verrippung (11,11 a) mit dem thermoplastischen Kunststoff, der Kurzfasern aus einem Verstärkungsmaterial in einem Volumenanteil von zumindest 30 % umfasst,
- Aushärten der Verrippung (11,11a) und Entformen des FVK-Steuergehäusemoduls (1) aus dem Spritzgießwerkzeug (20),
**dadurch gekennzeichnet, dass**
die Verrippung (11,11a) kraftflussgerechte Rippenstrukturen (11a) und regelmäßig geformte sich kreuzende Längs-, Quer-, und/oder Diagonalverstärkungsrippen (11) ausbildet,
und in den von den Rippen (11,11a) begrenzten Zwischenrippenräumen (13) ein Schaummaterial eingebracht wird.

9. Verfahren nach Anspruch 8,
wobei das Verfahren zumindest einen der Schritte umfasst:
- beim Zuschneiden, Formen und/oder Anspritzen Ausbilden von Integrationsund/oder Anbindungs- und/oder Aufnahmestrukturen für Nebenaggregate oder
- Fertigen von Hinterschneidungen mittels eines mehrteiligen Spritzgießwerkzeugs
oder
- Ausschäumen der Zwischenrippenräume (13) oder
- Anordnen und Verbinden einer flächigen Verstärkungsstruktur (12) auf der von dem Einleger (10) abgewandten Seite der Rippen (11,11 a) und/oder der von den Rippen abgewandten Seite des Einlegers (10) oder
- Verbinden von zumindest zwei mit einer Rippenstruktur (11,11a) ausgestatteten Einlegern (10,10') durch Verschweißen an den Rippen (11,11a) oder
- Verbinden von zumindest zwei Einlegern (10,10') unter Bildung eines Hohlprofils
oder
- Integrieren eines FVK-Rohrs in den Einleger (10) als Randverstärkung und/oder Leitung (7).

## Claims

1. Timing housing module (1) for an internal combustion engine,
comprising integration and/or connection and/or location structures for ancillary components (2, 3, 4, 5, 6, 7, 8) and a rib structure,
wherein the timing housing module (1) consists of a fibre/plastic composite,
**characterised in that**
the fibre/plastic composite comprises at least one insert (10) made of a planar fibrous textile in a thermoplastic plastic matrix,
the rib structure consists of sprayed-on reinforcing ribs (11, 11 a) of a thermoplastic plastic material which includes at least 30% by volume of short fibres of a reinforcing material ,
the rib system (11, 11a) comprises rib structures (11a) corresponding to power flow as well as regular intersecting longitudinal, transverse and/or diagonal reinforcing ribs (11),
and a foam material is placed in the rib interstices (13) bounded by the ribs (11, 11a).

2. Timing housing module (1) according to claim 1,
**characterised in that**
at least 40%, preferably at least 50% and particularly preferably at least 60% by volume of short fibres are present.

3. Timing housing module (1) according to claim 1 or 2,
**characterised in that**
the thermoplastic plastic material of the matrix and/or of the ribs (11, 11a) has a high thermal stability and is in particular selected from a group which includes polyamide, polyethylene sulphide, polyphthalamide, polyether ketone and combinations thereof.

4. Timing housing module (1) according to one or more of claims 1 to 3, **characterised in that**
at least some sections if the timing housing module (1) are provided
- on the side of the ribs (11, 11 a) which is remote from the insert (10) and/or
- on the side of the insert (10) which is remote from the ribs (11, 11a) with a planar reinforcing structure (12), which is
- a fibre-reinforced thermoplastic plate (12), in particular an organic sheet (12), cut in accordance with a power flow, and/or
- a TFP textile pre-impregnated and pre-consolidated with a thermoplastic plastic material in accordance with a power flow, and/or
- an arrangement of prepreg ribbons of reinforcing fibres in the thermoplastic matrix, which are placed in accordance with a power flow,
wherein the planar reinforcing structure (12) is joined to the ribs (11, 11a) and/or to the insert either directly of by means of a thermoplastic layer (12'), and wherein
wherein the thermoplastic plastic material of the thermoplastic plate (12), the pre-impregnated TFP textile, the prepreg ribbons and/or the layer (12') consist(s) of a thermally stable thermoplastic plastic material from a group which includes polyamide, polyethylene sulphide, polyphthalamide, polyether ketone and combinations thereof, and wherein the thermoplastic layer (12') in particular includes at least 30% by volume of short fibres of a reinforcing material.

5. Timing housing module (1) according to one or more of claims 1 to 4,
**characterised in that**
the timing housing module (1) comprises at least two inserts (10, 10'),
- each of which is provided with a rib structure (11, 11') and which are joined to one another via the rib structures (11, 11'), or
- of which a first insert (10) provides at least one formed section as a semi-profile joined to the second insert (10'), which complements the semi-profile to form a hollow profile.

6. Timing housing module (1) according to one or more of claims 1 to 5,
**characterised in that**
the timing housing module (1) comprises at least one fibre-reinforced plastic tube (14) as edge reinforcement and/or a line (7) integrated into the insert (10).

7. Timing housing module (1) according to one or more of claims 1 to 6,
**characterised in that**
the insert (10) is an organic sheet (10), the planar fibrous textile being an interlaid scrim or a woven fabric of reinforcing fibres, which are glass, carbon and/or polymer, in particular aramide, fibres, in particular in satin, body or linen weave.

8. Method for producing a timing housing module (1) according to one or more of claims 1 to 7,
comprising the steps of:
- cutting out the planar fibrous textile with a thermoplastic plastic matrix in accordance with the timing housing module (1) to produce the insert (10),
- heating the thermoplastic plastic matrix and, if applicable, pre-forming and placing the insert (10) in an injection moulding tool (20),
- closing the injection moulding tool (20), accompanied by the formation of the insert (10),
- spraying on at least the rib system (11, 11 a) with the thermoplastic plastic material, which contains at least 30% by volume of short fibres of a reinforcing material,
- curing the rib system (11, 11 a) and removing the fibre-reinforced plastic timing housing module (1) from the injection moulding tool (20),
**characterised in that**
rib system (11, 11 a) is designed as rib structures (11 a) corresponding to power flow as well as regular intersecting longitudinal, transverse and/or diagonal reinforcing ribs (11),
and a foam material is placed in the rib interstices (13) bounded by the ribs (11, 11 a).

9. Method according to claim 8,
the method comprising one or more of the steps of:
- in the cutting, forming and/or spraying process, the formation of integration and/or connection and/or location structures for ancillary components, or
- the production of undercuts by means of a multi-part injection moulding tool, or
- the filling of the rib interstices (13) with foam, or
- the placing and joining of a planar reinforcing structure (12) on the side of the ribs (11, 11 a) which is remote from the insert (10) or on the side of the insert (10) which is remote from the ribs (11, 11 a), or
- the joining of at least two inserts (10, 10') provided with a rib structure (11, 11') by welding at the ribs (11, 11'), or
- the joining of at least two inserts (10, 10') to form a hollow profile, or
- the integration of a fibre-reinforced plastic tube into the insert (10) as an edge reinforcement and/or line (7).

## Revendications

1. Module de boîtier de commande (1) pour un moteur à combustion interne, qui comprend des structures de réception et/ou de liaison et/ou d'intégration pour des organes auxiliaires (2, 3, 4, 5, 6, 7, 8) et une structure nervurée, le module de boîtier de commande (1) est composé d'un composite en matière synthétique/fibres, **caractérisé en ce que** le composite en matière synthétique/fibres présente au moins un insert (10) constitué d'un textile fibreux plat dans une matrice en matière synthétique thermoplastique, **en ce que** la structure nervurée est constituée de nervures de renforcement (11, 11 a) moulées par injection constituées en matière synthétique thermoplastique qui contient des fibres courtes d'un matériau de renforcement à raison d'une part en volume d'au moins 30 %, **en ce que** le nervurage (11, 11a) comprend des structures nervurées (11a) correspondant au flux de force et des nervures de renforcement longitudinales (11), transversales et/ou diagonales régulières en intersection et **en ce qu'**un matériau à base de mousse est agencé dans les espaces entre nervures (13) délimités par les nervures (11, 11a).

2. Module de boîtier de commande (1) selon la revendication 1, **caractérisé en ce que** la part en volume des fibres courtes s'élève au moins à 40 %, de préférence au moins à 50 %, de préférence encore au moins à 60 %.

3. Module de boîtier de commande (1) selon la revendication 1 ou la revendication 2, **caractérisé en ce que** la matière synthétique thermoplastique de la matrice et/ou des nervures (11, 11 a) possède une grande résistance à la déformation thermique et est notamment sélectionnée parmi un groupe comprenant du polyamide, du polysulfure de phénylène, du polyphtalamide, du polyétheréthercétone et leurs combinaisons.

4. Module de boîtier de commande (1) selon au moins l'une quelconque des revendications 1 à 3, **caractérisé en ce que** le module de boîtier de commande (1) est doté au moins en partie sur le côté en regard de l'insert (10) des nervures (11, 11 a) et/ou sur le côté de l'insert (10) en regard des nervures (11, 11 a) d'une structure de renforcement (12) plate, qui est une plaque en matière thermoplastique renforcée de fibres adaptée au flux de force, en particulier un composite à matrice thermoplastique et à fibres longues (12) et/ou un tissu TFP pré-imprégné ou préconsolidé d'une matière synthétique thermoplastique correspondant au flux de force et/ou un agencement de petites bandes pré-imprégnées en fibres de renforcement dans la matrice thermoplastique distribuées de manière correspondante au flux de force, la structure de renforcement (12) plate est reliée directement ou au moyen d'une couche (12') thermoplastique aux nervures (11, 11 a) et/ou à l'insert, et la matière synthétique thermoplastique de la plaque thermoplastique (12) du textile TFP pré-imprégnée, des petites bandes pré-imprégnées et/ou la couche (12') est constituée d'une matière synthétique thermoplastique résistante à la déformation thermique sélectionnée parmi un groupe comprenant du polyamide, du polysulfure de phénylène, du polyphtalamide, du polyétheréthercétone et leurs combinaisons et la couche thermoplastique (12') comprenant en particulier des fibres courtes constituées en matériau de renforcement dans une part en volume d'au moins 30 %.

5. Module de boîtier de commande (1) selon au moins l'une quelconque des revendications 1 à 4, **caractérisé en ce que** le module de boîtier de commande (1) comprend au moins deux inserts (10, 10'), qui sont à chaque fois dotés d'une structure nervurée (11, 11 a) et reliés l'un à l'autre par des structures nervures (11, 11a) ou dont un premier insert (10) dispose d'au moins une section façonné en tant que demi-profil qui est relié au second insert (10') qui vient apparier le demi-profil à un profil creux.

6. Module de boîtier de commande (1) selon au moins l'une quelconque des revendications 1 à 5, **caractérisé en ce que** le module de boîtier de commande (1) comprend au moins un tuyau en FVK (14) en tant que renforcement de bord et/ou une conduite (7) intégrée dans les inserts (10).

7. Module de boîtier de commande (1) selon au moins l'une quelconque des revendications 1 à 6, **caractérisé en ce que** l'insert (10) est un composite à matrice thermoplastique et à fibres longues, le textile fibreux plat est un tissu, en particulier en armure toile, croisement satin, armure croisée constitué de fibres de renforcement qui sont des fibres de verre, de carbone et/ou en polymère, en particulier d'Aramide.

8. Procédé de production d'un module de boîtier de commande (1) selon au moins l'une quelconque des revendications 1 à 7, comprenant les étapes suivantes consistant à découper le textile fibreux plat avec la matrice synthétique thermoplastique correspondant au module de boîtier de commande (1) à la dimension de l'insert (10), chauffer la matrice synthétique thermoplastique et si nécessaire préformer et insérer l'insert (10) dans un outil de moulage par injection (20), fermer l'outil de moulage par injection (20) ce faisant former l'insert (10), injecter au moins dans le nervurage (11, 11 a) la matière synthétique thermoplastique qui comprend des fibres courtes constituées d'un matériau de renforcement dans une part en volume d'au moins 30 %, durcir le nervurage (11, 11 a) et démouler le module de boîtier de commande FVK (1) de l'outil de moulage par injection (20), **caractérisé en ce que** le nervurage (11, 11 a) forme des structures nervurées (11a) correspondant au flux de force et des nervures de renforcement longitudinales (11), transversales et/ou diagonales régulières en intersection, et un matériau à base de mousse est agencé dans les espaces de nervures (13) délimités par les nervures (11, 11a).

9. Procédé selon la revendication 8, le procédé comprenant au moins l'une des étapes suivantes consistant à : lors de la découpe, former et/ou injecter, former des structures d'intégration et/ou de liaison ou encore de logement pour les organes auxiliaires ou fabriquer des contre-dépouilles au moyen d'un outil de moulage par injection en plusieurs parties ou consistant en l'expansion de la mousse dans les espaces de nervures (13) ou à disposer ou relier une structure de renforcement (12) plate sur le côté des nervures (11, 11 a) en regard de l'insert (10) et/ou sur le côté en regard de l'insert (10) en regard de l'insert (10) ou relier au moins deux inserts (10, 10') dotés d'une structure nervurée (11, 11 a) par soudage sur les nervures (11, 11 a) ou relier au moins deux inserts (10, 10') pour former un profil creux ou intégrer un tuyau FVK dans les inserts (10) comme renforcement de bord et/ou conduite (7).
